Europäisches Patentamt

European Patent Office

Office européen des brevets

(19)

(11) Publication number: **0 061 870**

**A1**

(12) **EUROPEAN PATENT APPLICATION**

(21) Application number: **82301385.9**

(22) Date of filing: **18.03.82**

(51) Int. Cl.³: **B 60 N 1/04**

(30) Priority: **21.03.81 GB 8108919**

(43) Date of publication of application:
**06.10.82 Bulletin 82/40**

(84) Designated Contracting States:
**AT BE CH DE FR GB IT LI LU NL SE**

(71) Applicant: **Jones, David Llewelyn**
**Hillside Glyndwr Road**
**Gwernymynydd Mold North Wales(GB)**

(72) Inventor: **Jones, David Llewelyn**
**Hillside Glyndwr Road**
**Gwernymynydd Mold North Wales(GB)**

(74) Representative: **Stringer, David Hiram et al,**
**GEOFFREY OWEN & COMPANY 76 Lower Bridge Street**
**Chester(GB)**

(54) Improvements relating to seats for use in motor vehicles.

(57) The present specification describes a seat (5, 7) for use in an automotive vehicle (3). Conventional automotive vehicles (3) provide difficulties when required for use by handicapped persons. Such difficulties are especially highlighted when a handicapped person who uses a wheelchair (25), requires the wheelchair (25) to also be transported in the automotive vehicle (3). Conventional two door vehicles (3) provide a severely restricted amount of space (17) between the back sections (7) of the front seats (5, 7) and the sides (29) of the vehicle body, preventing the storage of wheelchairs (25) in the rear (27) of the vehicle (3) and providing only restricted access to the rear (27) of the vehicle (3).

The present specification describes an automotive vehicle seat (5, 7) for use in an automotive vehicle (3), which seat (5, 7) is especially useful in adapting a standard motor vehicle (3) for use by a handicapped person, the seat (3) enabling a wheelchair (25) to be simply stored in the rear part (27) of the vehicle, and allowing access to the rear of the vehicle to be increased. The seat comprises a back section (7) and a squab (5), the squab (5) being adapted to be pivoted about a generally vertical axis and the back section (7) being movable relative to the squab (5) in a generally horizontal, lateral direction, as and when required. When the squab (5) is pivoted and the back section (7) moved laterally, access to the rear (27) of the vehicle (3) is thus considerably increased, allowing, for example, a wheelchair (25) to be easily moved into and stored in the rear (27) of the vehicle (3).

Fig.2

-1-

DESCRIPTION

## IMPROVEMENTS RELATING TO SEATS FOR USE IN MOTOR VEHICLES

The present invention relates to a seat for use in a motor vehicle, the seat being especially suited for use by handicapped persons.

Considering the case of a handicapped person who usually uses a wheelchair to move him or herself around, extreme problems can and do occur when that person requires to travel distances by car and it is necessary for the wheelchair to be easily and safely stored away in the car. These problems are further amplified if the handicapped person is to travel alone and has to stow the wheelchair by himself or herself.

To alleviate these problems of a handicapped person and his or her wheelchair, special motor vehicles have previously been constructed. However, these vehicles have proved unsafe due to their design economics, i.e. with a limited market the cars were designed to be manufactured as cheaply as possible and the resultant designs have been found to be dangerous on the road. Manufacture of these vehicles has therefore ceased.

The aim of the present invention is to provide a seat for use in a motor vehicle whereby a standard motor vehicle can be simply adapted for easy use by a handicapped person requiring the transport of a wheelchair.

According to the present invention there is provided a seat for use in an automotive vehicle, the seat comprising a back section and a squab, the squab being adapted to be mounted in the vehicle so as to be pivotable about a generally vertical axis and the back section being movable relative to the squab in a generally horizontal direction, when required.

Thus, by virtue of a seat constructed according to the present invention a standard motor car e.g. a British Leyland Mini Metro, can be simply modified for easy use by a handicapped person requiring wheelchair stowage. The seat incorporates locks which lock the squab in position in the vehicle and the back section relative to the squab. When a wheelchair is to be stowed away the locks are released and the squab is pivoted about the said generally vertical axis increasing the access space to the back of the car, between the seat and the vehicle body. To further increase the access space to the rear of the vehicle the back section of the seat is also moved generally horizontally, e.g. moved sideways. This then allows access to the rear seat region of the vehicle where a conventional wheelchair retaining trough can be mounted, which trough preferably has an extendible portion which can overly the vehicle door sill when extended. To also facilitate stowage of the wheelchair a winch (electrical or mechanical) can be provided to supply, lift and swing the wheelchair into the retaining trough. With the wheelchair safely stowed, the back section and squab can be returned to their conventional positions wherein they are locked.

Whilst the seat squab may be pivotable about an axis passing through approximately the centre of the seat squab, the pivotal axis preferably passes through a front corner region of the squab, this pivotal arrangement enabling greater access space between squab and vehicle body, to be achieved.

In one embodiment of the present invention the seat squab is mounted on conventional forward and rearward sliding runners which are fixed to a plate or frame, the plate or frame being pivotally secured to and lockable to, the vehicle floor. However, any other suitable pivotal arrangement can be utilised. Further, the pivotal motion of the seat squab and the back section may be controlled electrically, mechanically or pneumatically, by separate levers or a common control.

In a further embodiment of the present invention, the seat squab is fixedly mounted on a supporting frame assembly which can be conventionally mounted on sliding runners on the floor of the vehicle. The supporting frame assembly comprises a first subsidiary frame which carries the seat squab and a second subsidiary frame which is secured to the sliding runners. The first subsidiary frame is connected to the second subsidiary frame by a pivotal connection located at a front corner region of the seat, the front subsidiary frame being thus pivotable about a generally vertical axis relative to said second subsidiary frame. Various locking means are of course provided, to lock the frames together in at least two relative positions. The advantage of said further embodiment over said one embodiment is that it can simply replace an existing conventional car seat, without modification being required.

To provide for sideways movement of the back section of the seat the back section may be slidable on a horizontal axle provided at the rear of the seat squab. This axle may serve the dual function of allowing the back section to recline. Alternatively, the back section of the seat may be secured to the rear of the seat squab by a parallelogram linkage which enables the back section to be lifted and moved to the side of the squab, the linkage merely moving between its limit positions.

Whilst a seat according to the present invention is especially suited for use by handicapped persons requiring wheelchair stowage, seats according to the present invention may also provide for additional advantages.

For example, both the driving seat and passanger seat may be constructed according to the present invention merely to facilitate entrance to the rear seat of the vehicle. Alternatively, one or both seats may be arranged to be pivoted about a corner region of each respective squab, or the centre of each squab, to enable the space between the seats to be increased so that a table for, for example, work or a picnic, can be located comforably therebetween, e.g. the table could be slid out from the vehicle dashboard region.

The present invention will now be further described, by way of example, with reference to the accompanying drawings, in which:-

Fig.1 is a perspective view of part of a motor car incorporating a seat in the normal position and constructed according to the present invention;

Fig.2 is a view similar to that of Fig.1, with the seat moved to allow for easy access to the rear;

Fig.3 is a rear perspective view of one embodiment of a seat according to the present invention;

Fig.4 is a perspective rear view as in Fig.3 but with the seat moved to provide for access as in Fig.2;

Fig.5 is a perspective rear view of an alternative embodiment of the present invention;

Fig.6 is a rear view of one embodiment of the sliding mechanism for use in moving the back section of the seat sideways; and

Fig.7 is a perspective, partially cutaway view of a further embodiment of the present invention.

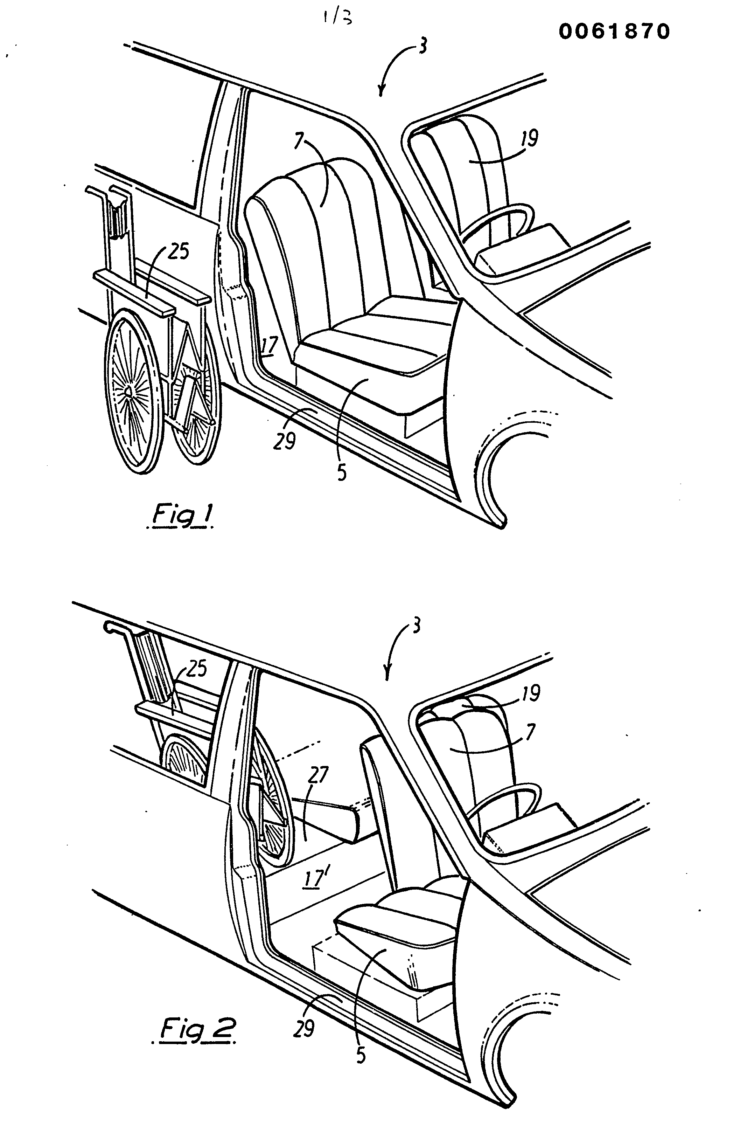

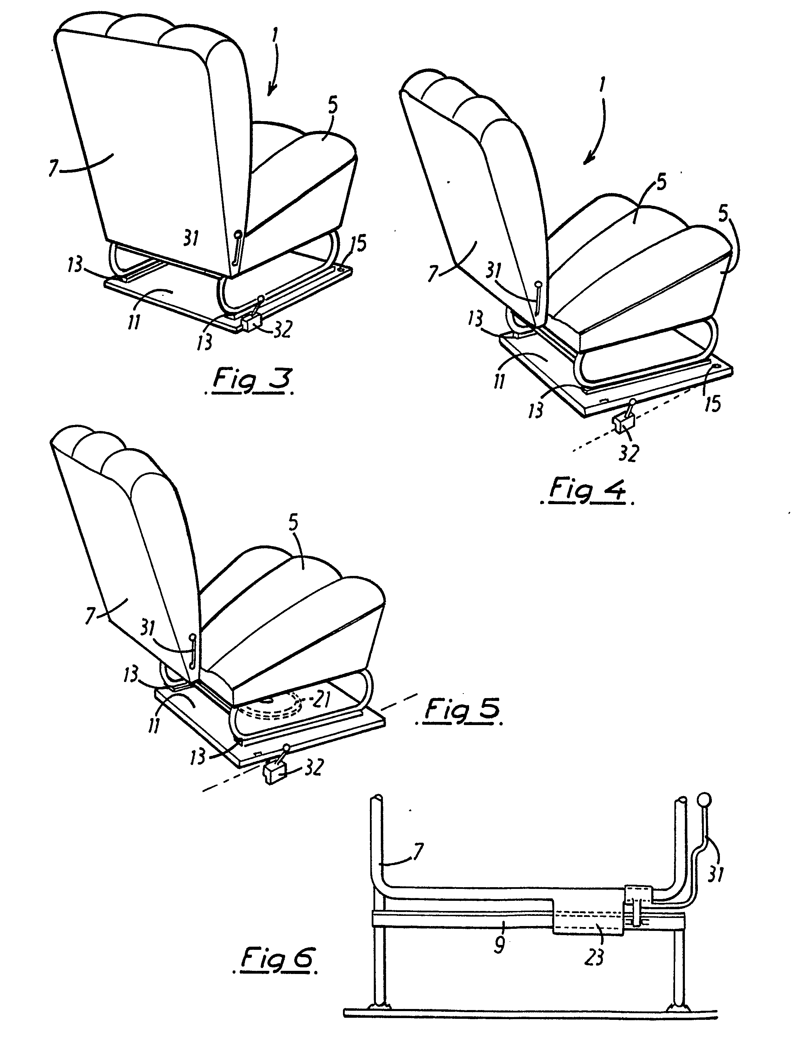

Figs. 1 to 4 of the accompanying drawings illustrate a seat 1 constructed according to the present invention and installed in a motor car 3. The seat 1 comprises a squab 5 and a back section 7, the back section 7 being secured to the squab 5 by a conventional reclining seat pivotal axle 9 (see Figs. 4 and 6) which additionally enables the back section 7 to move longitudinally relative to squab 5, as will be discussed later. The squab 5 is itself pivotally mounted on the floor of the vehicle 3 by virtue of plate 11 (see Fig.3) to which the slidable seat runners 13 are secured, the front, outer corner region 15 of the plate 11 being pivotally attached to the floor of the car.

Thus, as can be readily seen in Figs. 2 and 4, the squab 5 can be pivoted about corner region 15, and back section 7 can be slid sideways to increase normal gap 17 (see Fig.1) to provide access space 17' (see Fig.2), sufficient to allow the stowage of wheelchair 11. When the back section 7 is slid sideways it may at least partially pass over the squab of the passenger seat 19.

As an alternative to the corner pivot 15, the squab 5 can be pivoted about the centre region of the squab 5 (see Fig.5), though in such a case the access space 17' would be reduced as compared to the space provided by the corner pivot 15. With a centre squab mounting a circular track 21 (see Fig.5) can be utilised. This track 21 is preferably provided between plate 11 and the vehicle floor, runners 13 providing the conventional leg room adjustment.

To provide for the desired sideways motion of the back section 7 in the embodiments of Figs. 1 to 5, the back section 7 has an offset bearing section 23 (see Fig.6) which supports the back section on the reclining seat pivotal axle 9, the bearing section 23 being offset towards the vehicle side. Whilst this arrangement enables the back section 7 to be slid virtually completely across to the passenger side of the vehicle, it also strengthens the construction as it provides support in the required position when a person places his or her weight on the back section 7, as can be the usual practice for a handicapped person manipulating a wheelchair in the rear of the vehicle, or for any person entering the rear seat region of the vehicle.

Figure 2 shows a wheelchair 25 located in the vehicle 3. Preferably an extendible trough (not shown) is located in the rear seat region 27 of the vehicle, the trough being extendible to the vehicle door sill 29 to facilitate entry and exit of the wheelchair. Also, a winch (not shown) is preferably provided in the roof of the vehicle 3 to facilitate lifting and movement of the wheelchair 11 into and out of the car. This winch can be electrically or mechanically operable.

The above arrangement basically provides for a pivotal seat squab 5 and a sideways slidable back section 7. The squab 5 and back section 7 must, however, be positively lockable in the in use, Fig.1 position. Mechanical locks 31,32 are therefore illustrated. However, numerous lock arrangements are of course possible, and these may be mechanically, electrically or pneumatically controlled as may the actual pivotal motion of the squab and sliding action of the back section. Further, whilst separate controls can control the squab 5 and back section 7, a common control can alternatively be suitably used.

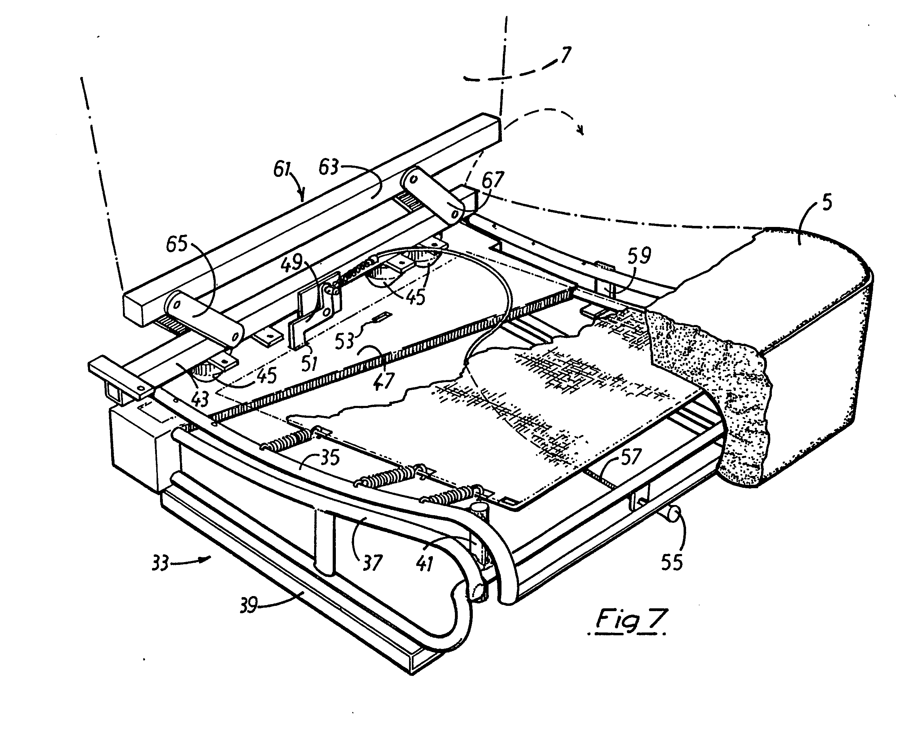

Fig.7 of the accompanying drawings illustrates a further embodiment of a vehicle seat constructed according to the present invention. As in the previous Figures of drawings, the seat in Fig.7 basically comprises a back section 7 and a seat squab 5 supported on a frame assembly generally designated 33. The frame assembly 33 comprises a first subsidiary frame 35 which carries the seat squab 5 and back section 7, and a second subsidiary frame 37 which can be secured to the floor of a vehicle in a conventional manner, on sliding runners 39. Thus, this further embodiment of the present invention may simply be substituted for an existing seat, requiring no modification of the vehicle itself.

The first and second subsidiary frames 35,37 are interconnected by a pivot 41 at the outside front corner region of the seat squab (when considered with the seat mounted in a vehicle), the pivot 41 allowing the first subsidiary frame 35 to be pivoted about a generally vertical axis with respect to said second subsidiary frame. The rear of the first subsidiary frame 35 has a cross member 43 which carries two bearing castors 45 on its undersurface, the bearing castors 45 engaging a support plate 47 secured transversely of and at the rear of the second subsidiary frame 37. The rollers 45 thus support the rear of the first subsidiary frame 35 allowing it to be pivoted about pivot 41 whilst being supported at all times.

To lock the first subsidiary frame 35 with respect to the second subsidiary frame 37, in the illustrated normal use position or in the pivoted position equivalent to that illustrated in Fig.2, locking means are provided. These locking means take the form in Fig.7 of an L-shaped member 49 which is pivotally mounted on cross member 43 and which is spring biassed downwards to firmly engage in either slot 51 or slot 53 provided in support plate 47. With L-shaped member 49 engaged in slot 51, as illustrated in Fig.7, the first and second subsidiary frames 35,37 are held in the normal use position. However, by activating release lever 55, L-shaped member 49 is lifted by Bowden cable 57, against the spring bias, from slot 51 and the first subsidiary frame 35 can be pivoted to the Fig.2 position wherein L-shaped member 49 can be engaged in slot 53. To prevent any possible lifting or tilting of the first subsidiary frame 35 with respect to the second subsidiary frame 37, when in the Fig.7 normal use position, L-shaped grips 59 are preferably provided on the first or second subsidiary frame, said grips 59 engaging in or around a section of the other frame in the Fig.7 normal use position.

To provide for the required sideways movement of the back section 7 of the seat in the embodiment of Fig.7, a parallelogram linkage generally designated 61 secures the back section 7 to the first subsidiary frame 35. This parallelogram linkage 61 comprises cross member 43 of the first subsidiary frame 35 and a like elongate cross member 63 secured along the bottom of back section 7, these cross members 43,63 having planar interengaging faces and being attached to each other by link members 65 and 67. One end region of a link member 65,67 is pivotally secured to cross member 43 and the other end region is pivotally secured to cross member 63, the dish members 65,67 being parallel to each other. Thus, by lifting the back section 7, the link members 65,67 allow the back section to be moved sideways with respect to the first subsidiary frame 35 until the cross members 43,63 again engage each other to provide the Fig.2 illustrated position for the back section 7.

Whilst the various above described arrangements are specially suited for modifying a vehicle for use by handicapped persons requiring wheelchair stowage, the basic concept of the invention also provides advantages for the normal person. Greater and safer access to the rear of the vehicle is one advantage. Further, if one or both of the front seats is arranged to be pivoted about the outer front or rear corner region of the squab 5 or the centre region of the squab, pivotal motion of the squab 5 increases the space between the seat squabs 5 enabling a table (not shown) for picnic or work, to be comfortably located therebetween. Such a table can possibly be slidably located in the dashboard region of the vehicle when not in use.

It is also conceivable for a seat according to the present invention to be pivotable about two points, e.g. the squab may be pivotable about the front outer corner region for easy access to the rear, and this pivot may be releasable to allow the squab to pivot about a subsequently connected rear outer corner region to increase the space between the front seats of the vehicle for the easy location of a table as referred to hereabove.

Thus it will be appreciated that the basic concept of the present invention provides for the simple modification of a standard motor car for handicapped person usage, with advantages also applicable to usage by normal persons, particularly the commercial traveller and the family who enjoy picnics in the car.

CLAIMS

1. A seat for use in an automotive vehicle, comprising a back section (7) and a squab (5), characterised in that the squab (5) is adapted to be mounted in the vehicle so as to be pivotable about a generally vertical axis and the back section (7) is movable relative to the squab (5) in a generally horizontal lateral direction, when required.

2. A seat as claimed in claim 1, in which the seat squab (5) is pivotable about an axis passing through approximately the centre of the seat squab (5).

3. A seat as claimed in claim 1, in which the seat squab (5) is pivotable about an axis passing through a corner region of the seat squab (5).

4. A seat as claimed in claim 2 or 3, in combination with an automotive vehicle, wherein the seat squab (5) is secured to a support member (11) which is pivotably secured to the vehicle floor.

5. A seat as claimed in claim 1, in which the back section (7) is axially slidable mounted on an axle (9) mounted at the rear of the seat squab (5).

6. A seat as claimed in claim 5, in which the back section (7) is provided with a bearing section (23) which supports the back section (7) on the axle (9), the bearing section (23) being offset from the centre of the seat squab (5) when the back section (7) is in the ready-for-use travel position.

7. A seat as claimed in any one of the preceding claims, in which locks (31,33) are provided to secure the seat squab (5) against pivoting and to secure the back section (7) in a ready-for-travel position.

8. A seat as claimed in claim 1, in which the seat squab (5) is supported on a frame assembly (33) comprising a first subsidiary frame (35) which carries the seat squab (5), and a second subsidiary frame (37) which can be secured to a vehicle floor in a conventional manner, said first and second subsidiary frames (35,37) being pivotally interconnected.

9. A seat as claimed in claim 8, in which the rear of the first subsidiary frame (35) has a cross member (43) which carries bearing castors (45) on its undersurface, the bearing castors (45) engaging a support plate (47) secured transversely of and at the rear of the second subsidiary frame (37).

10. A seat as claimed in claim 9, in which locking means (49,51,53) are provided to enable the first and second subsidiary frames (35,37) to be locked together.

11. A seat as claimed in claim 10, in which said locking means (49,51,53) comprise a member (49) which is pivotally mounted on said cross member (43), and which is spring biassed towards a position wherein it engages in one or more slots (51,53) provided in said support plate (47).

12. A seat as claimed in claim 8, in which generally L-shaped grips (59) are provided on at least one of said first and second subsidiary frames (35,37), said grips (59) securing the first and second subsidiary frames (35,37) together, preventing tilting therebetween, when said first and second subsidiary frames (35,37) are in a relative ready-for-travel position.

13. A seat as claimed in any one of claims 1 and 8, in which the back section (7) of the seat is attached to the rear of the seat squab (5) by a parallelogram linkage (61).

14. A seat as claimed in any one of claims 1 and 8, in which the back section (7) of the seat is attached to the rear of the seat squab (5) by a parallelogram linkage (61), the linkage (61) comprising a portion (63) of the back section (7) having a planar face which can engage on a planar face of a cross member (43) at the rear of the seat squab (5), said portion (63) and said cross member (43) being interconnected by at least two elongate link members (65,67) which are each pivotally attached to both said portions (61) of the back section (7) and said cross member (43), and which are parallel to each other.

1/3

0061870

_Fig 1._

_Fig 2._

Fig 3

Fig 4

Fig 5

Fig 6

Fig 7

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl. ³) |
|---|---|---|---|
| Y | US-A-2 800 947 (THIEM)<br>*The whole document* | 1 | B 60 N 1/04 |
| Y | GB-A- 525 663 (ILLINGWORHT)<br>*The whole document* | 1 | |
| A | US-A-1 643 236 (BELL)<br><br>*The whole document* | 1,5,6,7 | |
| A | FR-A-2 446 198 (BETTON)<br><br>*The whole document* | 1,2,4,7,8 | |
| A | FR-A- 928 275 (WILLYS)<br><br>*The whole document* | 1,3,4,7,8 | |
| | | | TECHNICAL FIELDS SEARCHED (Int. Cl. ³) |
| A | GB-A- 293 620 (RENAULT) | | B 60 N 1/04<br>B 60 N 1/02 |
| A | GB-A-1 426 428 (LORD) | | |
| A | US-A-4 123 028 (QUAKENBUSH) | | |
| A | FR-A-1 241 658 (GRIEFF) | | |

The present search report has been drawn up for all claims

| Place of search<br>THE HAGUE | Date of completion of the search<br>29-06-1982 | Examiner<br>CORMACI R.C. |
|---|---|---|